Europäisches Patentamt

European Patent Office

Office européen des brevets

(19)

(11) **EP 1 110 759 A1**

(12) **EUROPEAN PATENT APPLICATION**
published in accordance with Art. 158(3) EPC

(43) Date of publication:
**27.06.2001 Bulletin 2001/26**

(51) Int Cl.⁷: **B60C 9/00**, D07B 1/06

(21) Application number: **00907991.4**

(22) Date of filing: **10.03.2000**

(86) International application number:
**PCT/JP00/01460**

(87) International publication number:
**WO 00/53436 (14.09.2000 Gazette 2000/37)**

(84) Designated Contracting States:
**DE FR GB IT**

(30) Priority: **11.03.1999 JP 6519599**

(71) Applicant: **THE YOKOHAMA RUBBER CO., LTD.
Tokyo, 105-0004 (JP)**

(72) Inventors:
• **KOMATSU, Ryuzo,
The Yokohama Rubber Co., Ltd.
Hiratsuka-shi, Kanagawa 254-0047 (JP)**

• **IMAMIYA, Susumu,
The Yokohama Rubber Co., Ltd.
Hiratsuka-shi, Kanagawa 254-0047 (JP)**

(74) Representative: **HOFFMANN - EITLE
Patent- und Rechtsanwälte
Arabellastrasse 4
81925 München (DE)**

(54) **PNEUMATIC RADIAL TIRE**

(57)    A pneumatic radial tire having tire components consisting of steel cords. These steel cords have the following features: (a) The cords have a (1 + N)-filament structure fabricated by twisting together N sheath filaments around a core filament that has been spirally curled longitudinally of the cords; (b) The horizontal cross section of each cord has a low profile; (c) In the horizontal cross section of the cord, gaps are left between the adjacent sheath filaments, thus forming an open structure; (d) The core filament is wedged in between the sheath filaments; and (e) The direction in which the sheath filaments are twisted together is identical with the direction in which the core filament has been spirally curled.

# Fig. 5

**Description**

Technical Field:

The present invention relates to a pneumatic radial tire which provides an improved ride comfort while maintaining the durability and which can achieve further weight saving.

Background of the Invention:

In recent years, stricter weight saving requirements have been imposed on tires. Where a tire component forming a tire such as a carcass layer is fabricated by embedding steel cords in coating rubber made of a rubber compound, weight reduction can be accomplished by reducing the amount of the used steel cords or coating rubber. However, reducing the amount of the used steel cords makes the rigidity of the tire insufficient. Also, the tire performance, especially the durability, deteriorates greatly.

Accordingly, various contrivances have been made to reduce the amount of the used coating rubber. For example, in the technique described in Japanese patent application Kokai publication No. 8-325962, a core filament formed by curling steel cords spirally in the longitudinal direction of the cords is used. N sheath filaments are twisted together around the core filament to form a flattened open structure of (1 + N) filaments. Where steel cords are embedded in the coating rubber, the thickness of the rubber gauge is reduced. As a result, the amount of the used rubber is decreased. Also, the rubber is made to penetrate deeper into the steel cords, thus preventing rusting of the steel cords which would otherwise be caused by intrusion of water.

In the steel cords of the flattened open structure of the (1 + N) filaments described above, the sheath filaments are simply wound around the core filament. That is, three layers are formed as viewed in a horizontal cross section. Therefore, limitations are imposed on the method of reducing the thickness of the cords so as to provide a lower profile. Furthermore, it cannot be expected that the weight of the tire will be reduced and that the ride comfort will be improved.

Disclosure of the Invention:

It is an object of the present invention to provide a pneumatic radial tire in which steel cords used in tire components such as a carcass layer, a belt cover layer, a bead-reinforcing layer, and a sidewall-reinforcing layer are made to have an ultra low profile, thus improving the ride comfort and accomplishing further weight saving.

This object is achieved in accordance with the teachings of the invention by a pneumatic radial tire which has tire components made of steel cords having the following features: (a) The steel cords have a (1 + N)-filament structure formed by twisting N sheath filaments together around a core filament that has been curled spirally in the longitudinal direction of the cords; (b) Horizontal cross sections of the cords have a low profile; (c) In the horizontal cross section of each cord, a gap is formed between the adjacent sheath filaments, thus forming an open structure; (d) The core filament is wedged in between the filaments; and (e) The direction in which the core filament has been curled spirally is identical with the direction in which the sheath filaments are twisted together.

Since the steel cords are so designed that the core filament is wedged in between the adjacent sheath filaments in this way, two horizontal steel-code layers are formed. The vertical dimension, or height, can be more easily reduced than the three-layered structure in which sheath filaments simply surround a core filament. Consequently, ultra low-profile steel cords with an aspect ratio (profile ratio) of 0.7 or less which have been regarded as impossible to mass-produce on an industrial scale can be accomplished. Accordingly, by embedding the flattened surfaces of the steel cords in coating rubber to form tire components, reductions in their thickness can be achieved. This can contribute to a further reduction in the tire weight.

Because the tire components can be further thinned as described above, the bending rigidity in a direction vertical to the plane of the tire components decreases. Hence, the ride comfort can be improved further.

Furthermore, the core filament is wedged in between the sheath filaments and so the sheath filaments undergo a resistance from the core filament when a longitudinal tensile force is applied. This stabilizes the twisted form of the sheath filaments in the longitudinal direction. This characteristic prevents deformation of the cords when a tensile force is applied longitudinally of the cords during molding or vulcanization of the tire. Hence, the shape of the cords is maintained stably. Thus, deterioration of the tire uniformity is prevented.

Brief Description of the Drawings:

Fig. 1 is a half-sectional view of a pneumatic radial tire in accordance with the present invention taken along the meridian line of the tire, showing one example of arrangement of a carcass layer and a bead-reinforcing layer that are tire components;

Fig. 2 is a half-sectional view of a pneumatic radial tire in accordance with the invention taken along the meridian line of the tire, showing one example of arrangement of a belt cover layer that is a tire component;

Fig. 3 is a half-sectional view of a pneumatic radial tire in accordance with the invention taken along the meridian line of the tire, showing one example of arrangement of a sidewall-reinforcing layer that is a tire component;

Fig. 4 is a horizontal cross section of main portions of a sheetlike component that forms a tire component of a pneumatic radial tire in accordance with the invention;

Fig. 5 is a horizontal cross section of steel cords used in a tire component of a pneumatic radial tire in accordance with the invention;

Fig. 6 is a schematic view of main portions of the steel cords shown in Fig. 5; and

Fig. 7 is a side elevation of steel cords for reinforcing rubber, the steel cords being built in accordance with the invention.

Best Mode for Carrying Out the Invention:

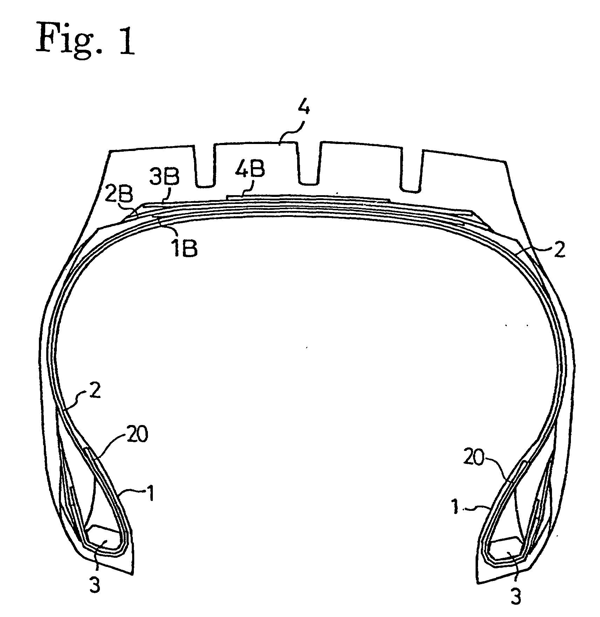

One example of a pneumatic radial tire in accordance with the present invention is shown in Figs. 1-3. In Fig. 1, the tire has a pair of beads 1 spaced from each other horizontally and a tread 4. Each bead 1 has a bead core 3. A carcass layer 2 extends into the beads 1, is outwardly bent back around each bead core 3 from inside, and is wound up. Four belt layers 1B, 2B, 3B, and 4B are arranged outside the carcass layer 2 in the tread 4 circumferentially of the tire and extend along the whole circumference of the tire.

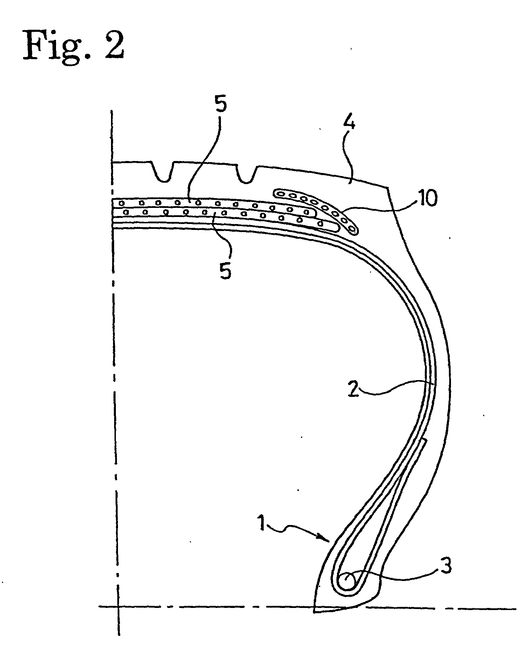

In Fig. 2, a belt cover layer 10 is disposed in addition to the tire structure shown in Fig. 1. The belt cover layer 10 is located outside each lateral end of belt layers 5, covers the vicinities of the lateral ends of the belt layers 5, and extends along the whole circumference of the tire. The belt cover layer 10 prevents the lateral ends of the belt layers 5 from being raised by centrifugal force during operation of the tire; otherwise, the cords forming the belt layers 5 would peel off from the coating rubber. The arrangement of the belt cover layer 10 is only required that the belt cover layer 10 cover the outside of each lateral end of the belt layers 5. To hold down at least the outside of each lateral end of the belt layers 5 by the belt cover layer 10 sufficiently, the cord angle between the belt cover layer 10 and the circumferential direction of the tire is set to almost 0°.

In Fig. 1, a bead-reinforcing layer (finishing layer) 20 extending from inside the tire toward the outside can be placed around the carcass layer 2 and the bead cores 3 in the beads 1. This bead-reinforcing layer 20 is often positioned where the tire is a large-sized, heavy-duty tire used for a truck, a bus, or the like.

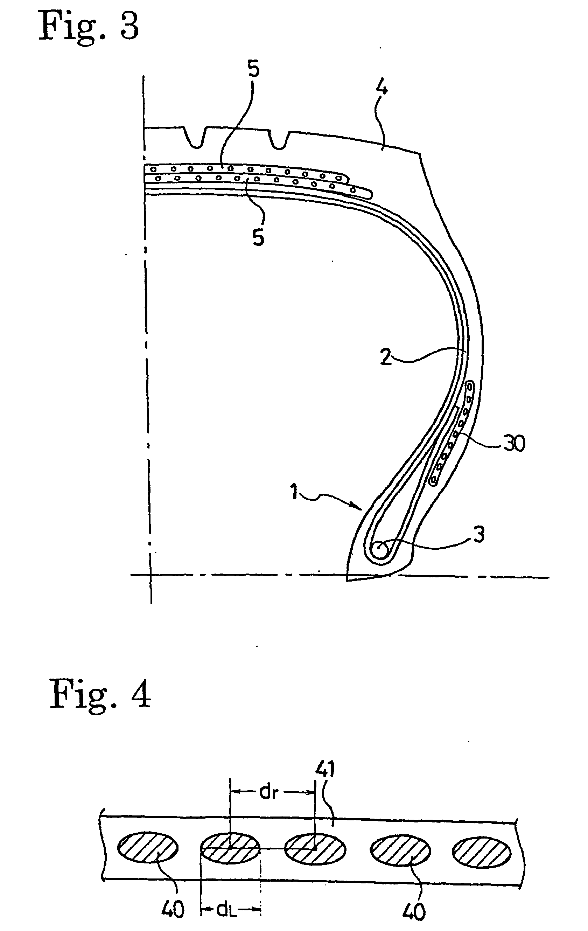

In Fig. 3, a sidewall-reinforcing layer 30 is positioned from the beads to their respective sidewalls outside the carcass layer 2. This sidewall-reinforcing layer 30 may extend from vicinities of positions corresponding to rim flanges to vicinities of positions where the tire exhibits its maximum width. This sidewall-reinforcing layer 30 is mounted mainly to improve the maneuverability, and is often used in the case of a passenger-car tire.

In the present invention, low-profile steel cords 40 are embedded in coating rubber 41 as shown in Fig. 4 to form a sheetlike component. The flattened surfaces of the steel cords 40 are made parallel to the surface of the sheetlike component. Thus, tire components such as the carcass layer 2, belt cover layer 10, bead-reinforcing layer 20, and the sidewall-reinforcing layer 30 as described above are formed. That is, in the horizontal cross section of Fig. 4, the major axis of each steel cord 40 is made parallel to the lateral direction of the sheetlike component.

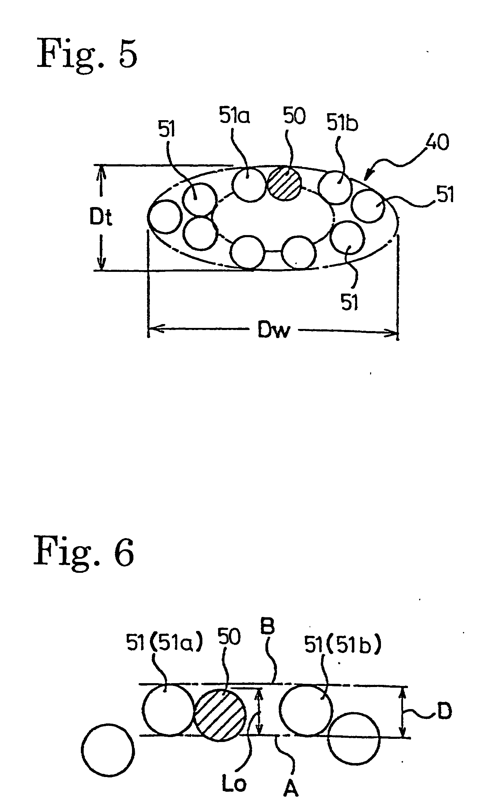

A horizontal cross section of each steel cord 40 is shown in Fig. 5, where N sheath filaments 51 are twisted together around a core filament 50 that has been curled spirally in the longitudinal direction of the cords. Thus, a $(1 + N)$-filament structure is formed. Gaps are left between the adjacent ones of the filaments. That is, an open structure is formed. Furthermore, the horizontal cross-sectional shape of the cord is crushed and flattened. N is 3 to 18. In the carcass layer 2, N is 4 to 18. In the belt cover layer 10, N is 3 to 12. In the bead-reinforcing layer 20, N is 4 to 18. In the sidewall-reinforcing layer 30, N is 4 to 12. The N sheath filaments 51 have at least one gap between the adjacent filaments in the horizontal cross section of the cord. The core filament 50 is wedged into this gap and, therefore, the core filament 50 is substantially integrated with the layers of the sheath filaments 51. In this way, the horizontal cross section of the cord is made up of two layers. Consequently, the section height, or the minor dimension of the cross section, can be reduced further. Hence, ultra low profile steel cords can be accomplished.

The rate at which the core filament 50 is wedged in between the adjacent filaments 51a and 51b of the sheath filaments 51 is referred to as the penetration rate and given by

$$L_0/D \times 100\%$$

where D (corresponding to the diameter of the sheath filaments 51) is the distance between the inner common line A and the outer common line B of the filaments 51a and 51b located on opposite sides of the core filament as shown in the enlarged view of Fig. 6 showing main portions of the cords and $L_0$ is the distance that the core filament 50 intrudes into the interior from the inner common line A.

The aspect ratio (profile ratio) is given by $D_t/D_w$, where $D_w$ is the major dimension (section width) and $D_t$ is the minor dimension (section height) of the steel cord 40 in its horizontal cross section. The aspect ratio is 0.25 to 0.70. Where the aspect ratio is less than 0.25, excessive low profile causes the filament to be bent back excessively at both lateral ends. The filament is damaged greatly. The fatigue resistance decreases. As a result, the wires break easily. Aspect ratios in excess of 0.70 can be obtained from the prior art cord structure without relying on the present invention. However, it is difficult to mass-produce such tires on an industrial scale that they provide ride comfort and weight saving achieved by the present invention, because of high aspect ratios. The aspect ratio $D_t/D_w$ is set to 0.25 to 0.70 in the carcass layer 2, the belt cover layer 10, and the bead-reinforcing layer 20. In the sidewall-reinforcing layer 30, the aspect ratio $D_t/D_w$ is preferably set to 0.25 to 0.60.

The shape of the steel cords 40 of the construction described above and for use in the present invention can be stabilized against tensile force because the core filament 50 is anchored by the sheath filaments 51, even if the aspect ratio is set to 0.7 or less. With respect to this cord shape-stabilizing effect, as the number of sheath filaments of the (1 + N)-filament structure is reduced, the core filament 50 tends to be wedged in deeper between the sheath filaments, and vice versa. Therefore, the optimum range is preferably set according to the number N in the manner described below.

A given length of steel cord is taken as a sample from the tire components of the tire while the coating rubber is attached. The sample is cut at regular intervals of 1 cm in the longitudinal direction into 50 equal parts. Thus, 50 cord sections are obtained. The range in which the cord shape-stabilizing effect is optimized is determined according to the percentage of the cord sections having penetration ratios more than a given value. Where N is 3 to 5, 50% or more (penetration possibility) are cord sections with penetration ratios of 45% or more. Where N is 6 to 9, 40% or more (penetration possibility) are cord sections with penetration ratios of 35% or more. Where N is 10 to 13, 30% or more (penetration possibility) are cord sections with penetration ratios of 25% or more. Where N is 14 to 18, 20% or more (penetration possibility) are cord sections with penetration ratios of 20% or more. At less penetration ratios, the core filament 50 is hardly wedged in between the sheath filaments. In particular, where N is 3 to 5, less than 50% are cord sections with such low penetration ratios. Where N is 6 to 9, less than 40% are cord sections with such low penetration ratios. Where N is 10 to 13, less than 30% are cord sections with such low penetration ratios. Where N is 14 to 18, less than 20% are cord sections with such low penetration ratios. Therefore, the horizontal cross section of each steel cord substantially assumes a three-layered structure. This makes difficult to accomplish an ultra low profile. These penetration ratio and penetration possibility can be checked by taking steel cords from the vulcanized tire while the coating rubber is attached, cutting the cords, and examining them.

In the steel code filaments used in the present invention, the direction in which the core filament 50 has been curled spirally is identical with the direction in which the sheath filaments 51 are twisted together. Where both directions are opposite, the core filament 50 and the sheath filaments 51 completely cross each other. Thus, the core filament 50 cannot be wedged in between the adjacent sheath filaments 51a and 51b.

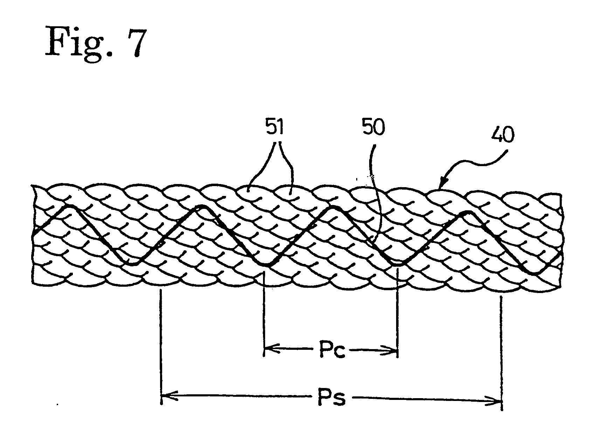

As shown in Fig. 7, the spiral pitch $P_c$ of the core filament 50 is preferably set smaller than the twist pitch $P_s$ of the sheath filaments 51. More preferably, the ratio of the spiral pitch $P_c$ to the twist pitch $P_s$, i.e., $P_c/P_s$. is set to 0.10 to 0.5. This relation can help wedge the core filament between the adjacent sheath filaments.

The diameters of the core filament 50 and the sheath filaments 51 should be set to 0.10 to 0.30 mm. Where the diameters are less than 0.10 mm, the filaments are too thin, and the rigidity of the tire components is insufficient. Furthermore, the side wires easily move and, therefore, the code shape is unstable. On the other hand, where the diameters are in excess of 0.30 mm, the cord diameters are too large and so the tire components are thick. The bending rigidity in a direction vertical to the plane of the tire components is large. This deteriorates the ride comfort. In addition, the fatigue resistance of the wires drops. In consequence, the tire durability may deteriorate. The core filament 50 and the sheath filaments 51 may or may not be identical in diameter. In the carcass layer 2, the diameter of the filaments is 0.15 to 0.25 mm. In the belt cover layer 10, the diameter is 0.10 to 0.25 mm. In the bead-reinforcing layer 20, the diameter is 0.12 to 0.25 mm. In the sidewall-reinforcing layer 30, the diameter is 0.15 to 0.30 mm.

In the (1 + N)-filament, ultra-low profile open cords having an aspect ratio ($D_t/D_w$) of 0.25 to 0.70, these cords are arranged parallel and embedded in the coating rubber. The obtained sheetlike component is rolled to form a tire component such as the carcass layer 2, the belt cover layer 10, the bead-reinforcing layer 20, or the sidewall-reinforcing layer 30. In this case, there is a danger of great deterioration of the tire durability. That is, when the sheetlike component obtained by embedding the cords in the coating rubber is rolled, the ends of the cord arrangement are disturbed. This leads to a deterioration of the tire durability. To avoid this problem, the ratio $d_1/d_2$ (where $d_1$ is the diameter of the wires of the core filament 50 and $d_2$ is the diameter of the wires of the sheath filaments 51) is preferably set to 1.04 to 1.1 provided that N = 3 to 8. The ratio $d_1/d_2$ is set to 1.04 to 1.08 provided that N = 9 to 18. Preferably, the ratio of the center-to-center distance $d_r$ between the two adjacent cords to the major dimension $d_L$ (equal to the section width $D_w$)

of the cord is set to 0.25 to 0.55.

The ratio $d_1/d_2$ is set within the range described above to achieve a balance in tension between the core filament 50 and the sheath filaments 51 where a tension is applied. The ratio $d_r/d_L$ is set within the range described above for the following reason. If this ratio $d_r/d_L$ is too small (in other words, the cord spacing is too small), the separation resistance of the tire components in the carcass layer 2 or the like deteriorates. On the other hand, where this ratio is too large (in other words, the cord spacing is too large), the tire motion performance such as maneuverability drops or the cords break, deteriorating the tire durability.

In the open structure of the steel cord 40 shown in Fig. 5, the adjacent filaments are in contact with each other at least at one location within the horizontal cross section. Not all the filaments are in contact with each other. That is, an incomplete open structure is formed. It is to be noted that the steel cords 40 used in the present invention are not limited to such an incomplete open structure. Ideally, all the filaments are isolated from each other at every location in the longitudinal direction, i.e., a complete open structure.

The steel cords having the aforementioned characteristics are manufactured in the manner described below. First, a core filament spirally curled in the longitudinal direction is prepared. N sheath filaments are loosely twisted together around this core filament while guiding this core filament. Thus, a cord is obtained. This cord is then passed through plural corrective rollers and compressed by a strong pressure to flatten the cord. The applied pressure is required to be so strong that the core filament is wedged in between the sheath filaments.

Examples

(1) Several samples of the tire structure similar to the structure shown in Fig. 1 except that the bead-reinforcing layer 20 was not present were formed. The tire sizes of all the samples were 11R22.5. The samples had steel cords having different dimensions as listed in Tables 1 and 2. These steel cords were used in the carcass layer of each sample. In this way, pneumatic radial tires were fabricated as Examples 1-7, Conventional Example 1, and Comparative Examples 1-7, respectively. Conventional Example 1 is a tire using the cords described in the above-cited Japanese patent application Kokai publication No. 8-325962. That is, the steel cords used in Conventional Example 1 are of an open structure having (1 + N) filaments and a low profile fabricated by twisting together N sheath filaments around a core filament spirally curled longitudinally of the cords.

The fatigue resistance, the tire outside circumference growth, weight saving, and shape stability of cords of these samples of tires were measured by the following measuring methods and evaluated. The results are given in Tables 1 and 2.

Fatigue Resistance

Each tire was run over a distance of 100 thousand kilometers. Wires were taken from the tire. The wires were subjected to a fatigue test by a rotation bending fatigue testing machine. The wires were evaluated with respect to the rotational frequency at which a rupture occurred. Holding Percent (%) = (rotational frequency at which the wire ruptured after the tire was run and the wire was taken from the tire)/(rotational frequency at which the wire ruptured after the wire was taken from an unrun tire) x 100. Every index is set under condition that the holding percent of Conventional Example 1 is set to 100. A greater index indicates better fatigue resistance.

Tire Outside Circumference Growth

A drum durability test was carried out at a speed of 55 km/hr for 47 hours with the normal rim of JATMA (1998) under normal load. The amount of growth compared with the outside circumference before running was taken as an index. The amount of growth of Conventional Example 1 was set to 100. A lower index indicates a better result.

Weight Saving

The weight of the carcass layer consisting of steel cords and coating rubber adhered to the steel cords was measured per tire. This was taken as an index; the value of Conventional Example was set to 100. A smaller index indicates better weight saving. Cord Shape Stability

Defective twists in steel cords per meter were measured with a stereoscopic microscope. Samples were taken at random. Five measurements (N = 5) were made, and their average was calculated. The result is taken as an index; the value of Conventional Example 1 is set to 100. A smaller index indicates better cord shape stability.

## Table 1

| | Example 1 | Example 2 | Comparative Example 1 | Conventional Example 1 | Example 3 | Comparative Example 2 | Comparative Example 3 |
|---|---|---|---|---|---|---|---|
| Cord Structure | 1+11×0.22 ultra low profile, open | 1+11×0.22 ultra low profile, open | 1+11×0.22 ultra low profile, open | 1+11×0.22 ultra low profile, open | 1+11×0.22 ultra low profile, open | 1+11×0.22 ultra low profile, open | 1+11×0.22 ultra low profile, open |
| Penetration Possibility | 54 | 40 | 20 | 0 | 54 | 54 | 54 |
| Aspect Ratio (=section height/section width) | 0.5 | 0.5 | 0.5 | 0.5 | 0.35 | 0.8 | 0.2 |
| Core/Sheath Pitch Ratio | 0.3 | 0.3 | 0.3 | 0.3 | 0.3 | 0.3 | 0.3 |
| Rubber Penetration (Index) | 167 | 167 | 142 | 100 | 167 | 167 | 167 |
| Rubber Penetration (Percent) | 100 | 100 | 85 | 60 | 100 | 100 | 100 |
| Fatigue Resistance (Index) | 158 | 150 | 108 | 100 | 150 | 158 | 108 |
| Fatigue Resistance (Holding %) | 95 | 90 | 65 | 60 | 90 | 95 | 65 |
| Tire Outside Circumference Growth (Index) | 63 | 70 | 85 | 100 | 58 | 70 | 55 |
| Weight Saving (Carcass Material) (Index) | 100 | 100 | 100 | 100 | 93 | 115 | 85 |
| Cord Shape Stability (Index) (Core Protrusion) | 15 | 25 | 90 | 100 (very bad) | 15 | 35 | 15 |

EP 1 110 759 A1

## Table 2

| | Example 4 | Example 5 | Comparative Example 4 | Comparative Example 5 | Example 6 | Example 7 | Comparative Example 6 | Comparative Example 7 |
|---|---|---|---|---|---|---|---|---|
| Cord Structure | 1+4×0.25 ultra low profile, open | 1+17×0.18 ultra low profile, open | 1+3×0.25 ultra low profile, open | 1+20×0.16 ultra low profile, open | 1+11×0.22 ultra low profile, open | 1+11×0.22 ultra low profile, open | 1+11×0.22 ultra low profile, open | 1+11×0.22 ultra low profile, open |
| Penetration Possibility | 64 | 30 | (not stable as low profile cord) | (not possible to mold outer sheaths) | 58 | 38 | 30 | 32 |
| Aspect Ratio (=section height/section width) | 0.5 | 0.35 | | | 0.5 | 0.5 | 0.5 | 0.5 |
| Core/Sheath Pitch Ratio | 0.3 | 0.3 | | | 0.15 | 0.4 | 0.05 | 0.6 |
| Rubber Penetration (Index) | 167 | 167 | | | 167 | 167 | 133 | 133 |
| Rubber Penetration (Percent) | 100 | 100 | | | 100 | 100 | 80 | 80 |
| Fatigue Resistance (Index) | 133 | 158 | | | 158 | 158 | 100 | 117 |
| Fatigue Resistance (Holding %) | 80 | 95 | | | 95 | 95 | 60 | 70 |
| Tire Outside Circumference Growth (Index) | 70 | 63 | | | 70 | 65 | 85 | 80 |
| Weight Saving (Carcass Material) (Index) | 100 | 80 | | | 100 | 100 | 100 | 100 |
| Cord Shape Stability(Index) (Core Protrusion) | 20 | 20 | | | 20 | 35 | 90 | 85 |

In Tables 1 and 2, Comparative Example 1 indicates a case in which the penetration possibility is too low.

Comparative Example 2 indicates a case in which the aspect ratio is too large. Comparative Example 3 indicates a case in which the aspect ratio is too small. Comparative Example 6 indicates a case in which the core/sheath pitch ratio ($P_c/P_s$) is too small. Comparative Example 7 indicates a case in which core/sheath pitch ratio ($P_c/P_s$) is too high. Examples 1-7 are superior to Conventional Example 1 and Comparative Examples 1-7 in any one of fatigue resistance, tire outside circumference growth, and weight saving.

(2) Samples of pneumatic radial tire of the construction shown in Fig. 2 were fabricated. Their tire sizes were all 205/55 R16. However, they used steel cords having different dimensions as listed in Tables 3 and 4, the steel cords being inserted in belt cover layers. These samples are referred to as Examples 8-14, Conventional Example 2, and Comparative Examples 8-16, respectively.

Various characteristics (i.e., high-speed durability, high-frequency road noise, ride comfort, belt durability (the resistance of the wires to breaking), and cord shape stability) of these tires were evaluated by the following measuring methods. The results are given in Tables 3 and 4.

High-Speed Durability

Each tire under test was mounted to a rim of 16 × 7JJ at an air pressure of 200 kPa. The tire was run on a drum having a diameter of 1707 mm under 88% of a load corresponding to an air pressure condition stipulated by JATMA (1998) at a speed of 121 km/hr for 30 minutes. Then, the speed was increased by 8 km/hr every 30 minutes. The distance traveled until the tire failed was measured. The tire was evaluated with respect to this distance and represented by an index; the value of Conventional Example 2 was set to 100. A larger index gives better results.

High-frequency Road Noise

The air pressure inside each tire under test was set to 200 kPa. The tire was mounted to a passenger car of 2500-cc displacement. The car was run on rough road surfaces at a speed of 50 km/hr. The overall road noise of frequencies of 0 to 400 Hz was measured at the side of the driver's side window at the height of the driver's ear. The high-frequency road noise especially refers to values in the measured range around 300 Hz. The value obtained from the tire of Conventional Example 2 was taken as a reference value. All measured values were indicated by a relative value based on this reference value.

Ride Comfort

The car was run on a test road surface with crisscross grooves at a speed of 50 km/hr. The felt ride comfort was indicated by an index; the value of Conventional Example 2 was set to 100. A greater index results in better ride comfort.

Weight Saving

A carcass layer was composed of steel cords used in the belt cover layer and coating rubber adhered to the steel cords. The weight of the carcass layer per tire was measured. The weight was indicated by an index; the value derived from Conventional Example 2 was set to 100. A smaller index gives better weight saving.

Belt Durability (Resistance of Wires to Fracture)

Each tire under test was mounted to a rim of 16 × 7JJ at an air pressure of 170 kPa. The tire was allowed to stand within an ambient of 70°C × 98% RH for 30 days, thus moistening the tire. Then, the tire was run on a drum having a diameter of 1707 mm under a varying load that is 73 ± 47% of a load corresponding to an air pressure condition stipulated by JATMA (1998) at a slip angle of 0 ± 5° over a distance of 300 km. The load and the slip angle were varied with a rectangular wave of 0.067 Hz. After the running, the tire under test was cut and unfolded. The belt was checked if there is any wire fracture.

Cord Shape Stability

Defective twists in steel cords per meter were measured with a stereoscopic microscope. Samples were taken at random. Five measurements (N = 5) were made, and their average was calculated. The result is taken as an index; the value of Comparative Example 9 is set to 100. A smaller index indicates better cord shape stability.

EP 1 110 759 A1

## Table 3

| | Example 8 | Example 9 | Comparative Example 8 | Conventional Example 2 | Comparative Example 9 | Example 10 | Comparative Example 10 | Comparative Example 11 |
|---|---|---|---|---|---|---|---|---|
| Cord Structure | 1+5×0.15 ultra low profile, open | 1+5×0.15 ultra low profile, open | 1+5×0.15 ultra low profile, open | 66N1260d/2 | 1+5×0.15 ultra low profile, open | 1+5×0.15 ultra low profile, open | 1+5×0.15 ultra low profile, open | 1+5×0.15 ultra low profile, open |
| Penetration Possibility | 64 | 54 | 40 | | 0 | 64 | 64 | 64 |
| Aspect Ratio (=section height/section width) | 0.5 | 0.5 | 0.5 | | 0.5 | 0.35 | 0.8 | 0.2 |
| Core/Sheath Pitch Ratio | 0.25 | 0.25 | 0.25 | | 0.25 | 0.25 | 0.25 | 0.25 |
| High-Speed Durability | 155 | 130 | 105 | 100 | 105 | 160 | 125 | 160 |
| High-Speed Road Noise | -3 dB | -2.5 dB | -2.3 dB | reference | -1.0 dB | -3.3 dB | -2.8 dB | -3.3 dB |
| Ride Comfort | 95 | 95 | 80 | 100 | 70 | 105 | 70 | 110 |
| Weight Saving (Belt Cover Material) (Index) | 97 | 97 | 97 | 100 | 97 | 91 | 114 | 87 |
| Belt Durability (Wire Fracture) | no fracture | no fracture | fracture | no fracture | fracture | no fracture | no fracture | fracture (Belt cover also contains fracture) |
| Cord Shape Stability (Index) (Core Protrusion) | 15 | 25 | 100 | — | 100 (very bad) | 10 | 40 | 15 |

EP 1 110 759 A1

## Table 4

| | Example 11 | Example 12 | Comparative Example 12 | Comparative Example 13 | Example 13 | Example 14 | Comparative Example 14 | Comparative Example 15 | Comparative Example 16 |
|---|---|---|---|---|---|---|---|---|---|
| Cord Structure | 1+4×0.17 ultra low profile, open | 1+11×0.15 ultra low profile, open | 1+3×0.18 ultra low profile, open | 1+14×0.14 ultra low profile, open | 1+5×0.15 ultra low profile, open | 1+5×0.15 ultra low profile, open | 1+5×0.15 ultra low profile, open | 1+5×0.15 ultra low profile, open | 1x6×0.15 low profile, open |
| Penetration Possibility | 70 | 50 | (not stable as low profile cord) | (not possible to mold outer sheaths) | 60 | 56 | 50 | 52 | — |
| Aspect Ratio (=section height/section width) | 0.5 | 0.35 | | | 0.5 | 0.5 | 0.5 | 0.5 | 0.75 |
| Core/Sheath Pitch Ratio | 0.25 | 0.25 | | | 0.15 | 0.45 | 0.05 | 0.65 | — |
| High-Speed Durability | 140 | 160 | | | 135 | 135 | 115 | 115 | 105 |
| High-Speed Road Noise | -2.5 dB | -2.8 dB | | | -2.4 dB | -2.3 dB | -2.3 dB | -2.4 dB | -1.0 dB |
| Ride Comfort | 90 | 120 | | | 95 | 95 | 95 | 95 | 65 |
| Weight Saving (belt Cover Material) (Index) | 100 | 95 | | | 97 | 97 | 97 | 97 | 111 |
| Belt Durability (Wire Fracture) | no fracture | no fracture | | | no fracture | no fracture | cords fracture (Belt cover also contains fracture) | fracture | fracture |
| Cord Shape Stability (Index) (Core Protrusion) | 30 | 15 | | | 20 | 20 | 40 | 40 | — |

In Tables 3 and 4, Conventional Example 2 indicates a case in which two-stranded 66-nylon cord (66N1260d/2) of 1260 denier is used in the belt cover layer. Comparative Example 8 indicates a case in which the penetration

10

possibility is too low. Comparative Example 9 indicates a case in which the penetration possibility is zero. Comparative Example 10 indicates a case in which the aspect ratio is too large. Comparative Example 11 indicates a case in which the aspect ratio is too small. Comparative Example 14 indicates a case in which the core/sheath pitch ratio ($P_c/P_s$) is too small. Comparative Example 15 indicates a case in which the core/sheath pitch ratio ($P_c/P_s$) is too large. Comparative Example 16 indicates a case in which the prior art open, low-profile structure is used.

Examples 8-14 are superior to Conventional Example 2 and Comparative Examples 8-16 in any one of high-speed durability, high-frequency road noise, ride comfort, weight saving, and belt durability.

(3) Samples of pneumatic radial tire of the construction shown in Fig. 1 were fabricated. Their tire sizes were all 11R22.5. However, they used steel cords having different dimensions as listed in Tables 5 and 6, the steel cords being inserted in bead-reinforcing layers. These samples are referred to as Examples 15-21, Conventional Example 3, and Comparative Examples 17-23, respectively.

The load durability, weight saving, moldability, and cord shape stability of each of these tires were evaluated by the measuring methods described below. The results are given in Tables 5 and 6.

Load Durability

Each tire was mounted to a normal rim of JATMA (1998), and the air pressure was set to a value corresponding to the maximum load stipulated by JATMA (1998). Then, the tire was run on a drum having a diameter of 1707 mm at a speed of 45 km/hr under a maximum load condition for 2 hours. Subsequently, the tire was run under a load that is 145% of the maximum load for 12 hours. Then, the load was increased by 10% every 48 hours. The distance traveled was measured until the tire ruptured. This distance is indicated by an index; the value derived from Conventional Example 3 is set to 100. A greater index gives better results.

Weight Saving

The weight of the bead-reinforcing layer consisting of steel cords and coating rubber adhered to the steel cords was measured per tire. This was taken as an index; the value of Conventional Example 3 was set to 100. A smaller index indicates better weight saving.

Moldability

The ease with which the steel cords are turned up in the bead portions was evaluated with respect to failure in the bead portions. This operation for turning up the steel cords is necessary during molding of tires. The value obtained from Conventional Example 3 is taken as a reference. ◎indicates a very good state. O indicates a relatively good state. x indicates a defective state.

Cord Shape Stability

Defective twists in steel cords per meter were measured with a stereoscopic microscope. Samples were taken at random. Five measurements (N = 5) were made, and their average was calculated. The result is taken as an index; the value of Conventional Example 3 was set to 100. A smaller index gives better cord shape stability.

## Table 5

| | Example 15 | Example 16 | Comparative Example 17 | Conventional Example 3 | Example 17 | Comparative Example 18 | Comparative Example 19 | Example 18 |
|---|---|---|---|---|---|---|---|---|
| Cord Structure | 1+8×0.20 ultra low profile, open | 1+8×0.20 ultra low profile, open | 1+8×0.20 ultra low profile, open | 1+8×0.20 ultra low profile, open | 1+8×0.20 ultra low profile, open | 1+8×0.20 ultra low profile, open | 1+8×0.20 ultra low profile, open | 1+4×0.22 ultra low profile, open |
| Penetration Possibility | 58 | 44 | 30 | 0 | 58 | 58 | 58 | 64 |
| Aspect Ratio (=section height/section width) | 0.5 | 0.5 | 0.5 | 0.5 | 0.3 | 0.8 | 0.2 | 0.5 |
| Core/Sheath Pitch Ratio | 0.25 | 0.25 | 0.25 | 0.25 | 0.25 | 0.25 | 0.25 | 0.25 |
| Rubber Penetration (Index) | 154 | 154 | 108 | 100 | 154 | 154 | 154 | 154 |
| Rubber Penetration Percent | 100 | 100 | 70 | 65 | 100 | 100 | 100 | 100 |
| Load Durability | 155 | 145 | 100 | 100 | 145 | 130 | 70 (wire fracture) | 140 |
| Weight Saving (Carcass Material) (Index) | 100 | 100 | 100 | 100 | 92 | 116 | 85 | 100 |
| Moldability | O | O | O | reference | ◎ | × | ◎ | O |
| Cord Shape Stability(Index) | 15 | 25 | 95 | 100 | 15 | 25 | 15 | 25 |
| (Core Protrusion) | | | | (very bad) | | | | |

EP 1 110 759 A1

## Table 6

| | Example 19 | Comparative Example 20 | Comparative Example 21 | Example 20 | Example 21 | Comparative Example 22 | Comparative Example 23 |
|---|---|---|---|---|---|---|---|
| Cord Structure | 1+17×0.14 ultra low profile, open | 1+3×0.25 ultra low profile, open | 1+20×0.13 ultra low profile, open | 1+8×0.20 ultra low profile, open | 1+8×0.20 ultra low profile, open | 1+8×0.20 ultra low profile, open | 1+8×0.20 ultra low profile, open |
| Penetration Possibility | 30 | | | 60 | 52 | 40 | 44 |
| Aspect Ratio (=section height/section width) | 0.35 | (not stable as low profile cord) | (not possible to mold outer sheaths) | 0.5 | 0.5 | 0.5 | 0.5 |
| Core/Sheath Pitch Ratio | 0.25 | | | 0.15 | 0.4 | 0.05 | 0.6 |
| Rubber Penetration (Index) | 154 | | | 154 | 154 | 115 | 115 |
| Rubber Penetration Percent | 100 | | | 100 | 100 | 75 | 75 |
| Load Durability | 145 | | | 155 | 155 | 105 | 110 |
| Weight Saving (Carcass Material) Index | 79 | | | 100 | 100 | 100 | 100 |
| Moldability | O | | | O | O | O | O |
| Cord Shape Stability(Index) (Core Protrusion) | 25 | | | 15 | 25 | 95 | 90 |

EP 1 110 759 A1

In Tables 5 and 6, Conventional Example 3 indicates a case in which steel cords are used that are fabricated simply by twisting together N sheath filaments around a core filament spirally curled longitudinally of the cord to form an open, low-profile structure of (1 + N) filaments, in the same way as Conventional Example 1. Comparative Example 17 indicates a case in which the penetration possibility is too small. Comparative Example 18 indicates a case in which the aspect ratio is too large. Comparative Example 19 indicates a case in which the aspect ratio is too small. Comparative Example 22 indicates a case in which the core/sheath pitch ratio ($P_c/P_s$) is too small. Comparative Example 23 indicates a case in which the core/sheath pitch ratio ($P_c/P_s$) is too large. Examples 15-21 are superior to Conventional Example 3 and Comparative Examples 17-23 in any one of load durability, weight saving, and moldability.

(4) Samples of pneumatic radial tire of the construction shown in Fig. 3 were fabricated. Their tire sizes were all 205/55 R16. However, they used steel cords having different dimensions as listed in Table 7, the steel cords being used in the sidewall-reinforcing layers. These samples are referred to as Examples 22-24, Comparative Examples 24-27, and Conventional Example 4, respectively. These tires were evaluated with respect to maneuverability, ride comfort, weight saving, load durability, and cord shape stability by the following measuring methods. The results are given in Table 7.

Maneuverability

The cornering power (Cp) was measured under measuring conditions of an air pressure of 200 kPa, a load of 4 kN, and a slip angle of 1°.

The maneuverability was represented by an index; the value of Conventional Example 4 was set to 100. A greater index represents a larger value of Cp, giving better maneuverability.

Ride Comfort

The vehicle was run on a test road surface having crisscross grooves at a speed of 50 km/h. The felt ride comfort was indicated by an index; the value derived from Conventional Example 4 was set to 100. A smaller index provides better ride comfort.

Weight Saving

A sidewall-reinforcing layer was composed of steel cords and coating rubber adhered to the steel cords. The weight of the sidewall-reinforcing layer per tire was measured. The weight was indicated by an index; the value derived from Conventional Example 4 was set to 100. A smaller index gives better weight saving.

Load Durability

Each tire under test was mounted to a rim of 16 × 7JJ at an air pressure of 180 kPa. Then, the tire was run on a drum having a diameter of 1707 mm at a speed of 81 km/hr under 85% of a maximum load corresponding to an air pressure condition specified by JATMA (1998) for 4 hours. Subsequently, the tire was run under a load that was 90% of the maximum load for 6 hours. Then, the tire was run under the maximum load for 24 hours. If there was no trouble, the tire was run under 115% of the maximum load for 4 hours. Then, the tire was run under 130% of the maximum load for 2 hours. If there was no trouble, the tire was run under 130% of the maximum load for 2 hours. Then, the tire was run under 145% of the maximum load for 4 hours. The tire was run under 160% of the maximum load. The distance traveled was measured until the tire ruptured. This distance is represented as an index; the value derived from Conventional Example 4 is set to 100.

Cord Shape Stability

Defective twists in steel cords per meter were measured with a stereoscopic microscope. Samples were taken at random. Five measurements (N = 5) were made, and their average was calculated. The result is indicated by an index; the value of Conventional Example 4 was set to 100. A smaller index gives better cord shape stability.

### Table 7

| | Example 22 | Example 23 | Example 24 | Comparative Example 24 | Comparative Example 25 | Conventional Example 4 | Comparative Example 26 | Comparative Example 27 |
|---|---|---|---|---|---|---|---|---|
| Cord Structure | 1+5×0.25 ultra low profile, open | 1+5×0.25 ultra low profile, open | 1+5×0.25 ultra low profile, open | 1+5×0.25 ultra low profile, open | 1+5×0.25 ultra low profile, open | 1+5×0.25 ultra low profile, open | 1x6×0.25 closed | 1x6×0.25 low profile, open |
| Penetration Possibility | 74 | 78 | 54 | 78 | 40 | 0 | — | — |
| Aspect Ratio (=section Height/section width) | 0.35 | 0.25 | 0.6 | 0.15 | 0.6 | 0.6 | 1 | 0.7 |
| Core/Sheath Pitch Ratio | 0.25 | 0.25 | 0.25 | 0.25 | 0.25 | — | — | — |
| Maneuverability (Cp) | 120 | 135 | 110 | 140 | 105 | 100 | 100 | 105 |
| Ride Comfort | 130 | 140 | 115 | 145 | 105 | 100 | 95 | 105 |
| Weight Saving (sidewall-reinforcing material) (Index) | 85 | 80 | 90 | 75 | 95 | 100 | 100 | 95 |
| Load Durability | 100 | 100 | 100 | Cords broke. | 100 | 100 | 100 | 100 |
| Cord Shape Stability (Index) (Core Protrusion) | 10 | 10 | 20 | 10 | 90 | 100 (very bad) | — | — |

In Table 7, Conventional Example 4 indicates a case in which steel cords fabricated simply by twisting together N sheath filaments around a core filament spirally curled longitudinally of the cords to form an open, low-profile structure of (1 + N) filaments, in the same way as Conventional Example 1, are used. Comparative Example 24 indicates a case in which the aspect ratio is too small. Comparative Example 25 indicates a case in which the penetration possibility is too small. Comparative Example 26 indicates a case in which steel codes of 1 $\times$ 6 closed structure (where all filaments are in contact with each other) are used. Comparative Example 27 indicates a case in which steel codes of 1 $\times$ 6 open structure are used.

Examples 22-24 are superior to Comparative Examples 24-27 and Conventional Example 4 in any one of maneuverability, ride comfort, weight saving, and load durability.

(5) The diameter $d_1$ of the wires forming the core filament 50 was made different from the diameter $d_2$ of the wires forming the sheath filaments 51. Steel cords having different dimensions as listed in Table 8 were used in the carcass layer as in (1) described above to fabricate pneumatic radial tires, which are referred to as Examples 25-29 and Conventional Example 1, respectively. This Conventional Example 1 is the same as the Conventional Example 1 in (1) above.

These tires were evaluated with respect to fatigue resistance, tire outside circumference growth, weight saving, and cord shape stability, in the same way as in (1) described above. The anti-separation of turned up ends (the anti-separation of the turned up ends of steel cords around the bead core in the carcass layer) and the presence or absence of disturbance at the ends during rolling were evaluated. The results are given in Table 8.

Anti-separation of Turned Up Ends

The tread of each tire was polished by a given amount. Air and oxygen were sealed into the tire at a ratio of 37.5:62.5. The tire was mounted to a normal rim stipulated by JATMA (1998). A drum durability test was carried out under 140% of the maximum load at a speed of 45 km/hr to travel a given distance. The resulting amount of separation was measured. The amount of separation was indicated by an index; the value derived from Conventional Example 1 was set to 100. A smaller index provides better anti-separation of turned-up ends.

Presence or Absence of Disturbance of Ends during Rolling

Plural cords were aligned and coated with rubber to form rolled materials. These rolled materials were observed with an X-ray device. If the alignment of one or more cords was observed to be disturbed or a defective twist was observed, then the material was referred to as "end disturbance". If no such phenomenon was observed, then the material was referred to as cords having "no end disturbance". $\Delta$ indicates cords having unstable ends which may or may not have disturbance.

## Table 8

| | Example 25 | Example 26 | Example 27 | Example 28 | Example 29 | Conventional Example 1 |
|---|---|---|---|---|---|---|
| Cord Structure | 1×0.24+11×0.22 ultra low profile, open | 1×0.23+11×0.22 ultra low profile, open | 1×0.245+11×0.22 ultra low profile, open | 1×0.23+11×0.22 ultra low profile, open | 1×0.23+11×0.22 ultra low profile, open | 1+11×0.22 ultra low profile, open |
| Penetration Possibility | 54 | 54 | 54 | 54 | 54 | 0 |
| Aspect Ratio (=section height/section width) | 0.5 | 0.5 | 0.5 | 0.5 | 0.5 | 0.5 |
| Core/Sheath Pitch Ratio | 0.3 | 0.3 | 0.3 | 0.3 | 0.3 | 0.3 |
| Rubber Penetration (Index) | 167 | 167 | 167 | 167 | 167 | 100 |
| Rubber Penetration Percent (%) | 100 | 100 | 100 | 100 | 100 | 60 |
| Wire Diameter Ratio (Core/Sheath) | 1.08 | 1.04 | 1.11 | 1.04 | 1.04 | |
| dr/dL (Cord Spacing/Cord Diameter) | 0.3 | 0.3 | 0.3 | 0.2 | 0.6 | |
| Fatigue Resistance (Index) | 163 | 163 | 117 | 163 | 100 | 100 |
| Fatigue Resistance (Holding %) | 98 | 98 | 70 | 98 | 60 | 60 |
| Tire Outside Circumference Growth (Index) | 63 | 63 | 63 | 63 | 80 | 100 |
| Weight Saving (Carcass Material) Index | 100 | 100 | 100 | 100 | 85 | 100 |
| Cord Shape Stability Index (Core Protrusion) | 25 | 15 | 45 | 15 | 15 | 100 (very bad) |
| Anti-separation Index of Turned-up Ends (Index) | 70 | 70 | 120 | 110 | 70 | 100 |
| End Disturbance during Rolling | no disturbance | no disturbance | end disturbance | no disturbance | no disturbance | Δ |

EP 1 110 759 A1

As can be seen from Table 8, Examples 25-29 are superior to Conventional Example 1 in any one of fatigue resistance, tire outside circumference growth, weight saving, cord shape stability, anti-separation of the turned up ends, and presence or absence of end disturbance during rolling. Note that the ratio $d_1/d_2$ (1.11) of Example 27 is outside the range of 1.04 to 1.08. Example 27 is inferior to Examples 26 and 27 in fatigue resistance (holding %) and anti-separation of the turned up ends. The ratio $d_r/d_L$ (0.2) of Example 28 is outside the range of 0.25 to 0.55. Example 28 is inferior to Examples 26 and 27 in anti-separation of the turned up ends. The ratio $d_r/d_L$ (0.6) of Example 29 is outside the range of 0.25 to 0.55. Example 29 is inferior to Examples 26 and 27 in fatigue resistance (holding %) and tire outside circumference growth.

With respect to Examples 1-7 and Comparative Examples 1-7 given in Tables 1 and 2, the anti-separation of the turned up ends is 100 except for Comparative Examples 4 and 5 and Example 5 (having anti-separation of 110). The presence or absence of end disturbance during rolling is A except for Comparative Examples 4 and 5.

(6) The diameter $d_1$ of the wires forming the core filament 50 was made different from the diameter $d_2$ of the wires forming the sheath filaments 51. Steel cords having different dimensions as listed in Table 9 were used in the belt cover layer in the same way as in (2) described above to fabricate pneumatic radial tires, which are referred to as Examples 30-35 and Conventional Example 2, respectively. This Conventional Example 2 is the same as the Conventional Example 2 in (2) described above.

These tires were evaluated with respect to high-speed durability, high-frequency road noise, ride comfort, weight saving, belt durability (the resistance of the wires to breaking), and cord shape stability) in the same way as in (2) above. The presence or absence of disturbance at the ends during rolling was evaluated in the same way as in (5) above. The results are given in Table 9.

## Table 9

| | Example 30 | Example 31 | Example 32 | Example 33 | Example 34 | Example 35 | Conventional Example 2 |
|---|---|---|---|---|---|---|---|
| Cord Structure | 1×0.156+5×0.15 ultra low profile, open | 1×0.165+5×0.15 ultra low profile, open | 1×0.16+5×0.15 ultra low profile, open | 1×0.175+5×0.15 ultra low profile, open | 1×0.16+5×0.15 ultra low profile, open | 1×0.16+5×0.15 ultra low profile, open | 66N1260d/2 |
| Penetration Possibility | 64 | 64 | 64 | 64 | 64 | 64 | |
| Aspect Ratio (=section height/section width) | 0.5 | 0.5 | 0.5 | 0.5 | 0.5 | 0.5 | |
| Core/Sheath Pitch Ratio | 0.25 | 0.25 | 0.25 | 0.25 | 0.25 | 0.25 | |
| Wire Diameter Ratio (Core/Sheath) dr/dL (Cord | 1.04 | 1.1 | 1.07 | 1.17 | 1.07 | 1.07 | |
| Spacing/Cord Diameter) | 0.3 | 0.3 | 0.3 | 0.3 | 0.2 | 0.6 | |
| High-speed Durability | 170 | 150 | 170 | 135 | 135 | 130 | 100 |
| High-speed Road Noise | -3 dB | -3 dB | -3 dB | -3.1 dB | -3.3 dB | -2.5 dB | reference |
| Ride Comfort | 95 | 95 | 95 | 95 | 95 | 105 | 100 |
| Weight Saving (Belt Cover Material) Index | 97 | 97 | 97 | 97 | 97 | 93 | 100 |
| Belt Durability (Wire Breaking) | No wire broke. | No wire broke. | No wire broke. | No wire broke. | No wire broke. | No wire broke. | No wire broke. |
| Cord Shape Stability (Index) (Core Protrusion) | 15 | 25 | 15 | 45 | 15 | 15 | |
| End Disturbance during Rolling | no disturbance | no disturbance | end disturbance | end disturbance | no disturbance | no disturbance | |

As can be seen from Table 9, Examples 30-35 are superior to Conventional Example 2 in any one of high-speed durability, high-frequency road noise, ride comfort, weight saving, and cord shape stability (resistance of wires to fracture). Note that the ratio $d_1/d_2$ (1.17) of Example 33 is outside the range of 1.04 to 1.1. Example 33 is inferior to Examples 30-32 in high-speed durability and cord shape stability. The ratio $d_r/d_L$ (0.2) of Example 34 is outside the range of 0.25 to 0.55. Example 34 is inferior to Examples 30-32 in high-speed durability. The ratio $d_r/d_L$ (0.6) of Example 35 is outside the range of 0.25 to 0.55. Example 35 is inferior to Examples 30-32 in high-speed durability.

With respect to Examples 8-14 and Comparative Examples 8-16 given in Tables 3 and 4, the presence or absence of end disturbance during rolling is A except for Comparative Examples 12 and 13 and Comparative Example 16.

(7) The diameter $d_1$ of the wires forming the core filament 50 was made different from the diameter $d_2$ of the wires forming the sheath filaments 51. Steel cords having different dimensions as listed in Table 10 were used in the bead-reinforcing layer as in (3) described above to fabricate pneumatic radial tires, which are referred to as Examples 36-41 and Conventional Example 3, respectively. This Conventional Example 3 is the same as the Conventional Example 3 in (3) above.

These tires were evaluated with respect to load durability, weight saving, moldability, and cord shape stability in the same way as in (3) above. The presence or absence of disturbance at the ends during rolling was evaluated in the same way as in (5) above. The results are given in Table 10.

## Table 10

| | Example 36 | Example 37 | Example 38 | Example 39 | Example 40 | Example 41 | Conven-tional Example 3 |
|---|---|---|---|---|---|---|---|
| Cord Structure | 1x0.208+8x0.20 ultra low profile, open | 1x0.22+8x0.20 ultra low profile, open | 1x0.215+8x0.20 ultra low profile, open | 1x0.23+8x0.20 ultra low profile, open | 1x0.125+8x0.20 ultra low profile, open | 1x0.125+8x0.20 ultra low profile, open | 1+8x0.20 ultra low profile, open |
| Penetration Possibility | 58 | 58 | 58 | 58 | 58 | 58 | 0 |
| Aspect Ratio (=section height/section width) | 0.5 | 0.5 | 0.5 | 0.5 | 0.5 | 0.5 | 0.5 |
| Core/Sheath Pitch Ratio | 0.25 | 0.25 | 0.25 | 0.25 | 0.25 | 0.25 | 0.25 |
| Rubber Penetration Index | 154 | 154 | 154 | 154 | 154 | 154 | 100 |
| Rubber Penetration Percent (%) | 100 | 100 | 100 | 100 | 100 | 100 | 65 |
| Wire Diameter Ratio (Core/Sheath) | 1.04 | 1.1 | 1.08 | 1.15 | 1.08 | 1.08 | |
| dr/dL (Cord Spacing/Cord Diameter) | 0.3 | 0.3 | 0.3 | 0.3 | 0.2 | 0.6 | |
| Load Durability | 165 | 150 | 165 | 130 | 130 | 125 | 100 |
| Weight Saving (Belt Cover Material) Index | 100 | 100 | 100 | 100 | 100 | 90 | |
| Moldability | O | O | O | O | O | O | reference 100 |
| Cord Shape Stability (Index) (Core Protrusion) | 15 | 25 | 15 | 45 | 15 | 15 | 100 (very bad) |
| End Disturbance during Rolling | no disturbance | no disturbance | no disturbance | end disturbance | no disturbance | no disturbance | Δ |

EP 1 110 759 A1

As can be seen from Table 10, Examples 36-41 are superior to Conventional Example 3 in any one of load durability, weight saving, moldability, cord shape stability, and presence or absence of disturbance of ends during rolling. Note that the ratio $d_1/d_2$ (1.15) of Example 39 is outside the range of 1.04 to 1.1. Example 39 is inferior to Examples 36-38 in load durability and cord shape stability. The ratio $d_r/d_L$ (0.2) of Example 40 is outside the range of 0.25 to 0.55. Example 40 is inferior to Examples 36-38 in load durability. The ratio $d_r/d_L$ (0.6) of Example 41 is outside the range of 0.25 to 0.55. Example 41 is inferior to Examples 36-38 in load durability.

With respect to Examples 15-21 and Comparative Examples 17-23 given in Tables 5 and 6, the presence or absence of end disturbance during rolling is Δ except for Comparative Examples 20 and 21.

(8) The diameter $d_1$ of the wires forming the core filament 50 was made different from the diameter $d_2$ of the wires forming the sheath filaments 51. Steel cords having different dimensions as listed in Table 11 were used in the sidewall-reinforcing layer as in (4) described above to fabricate pneumatic radial tires, which are referred to as Examples 42-47 and Conventional Example 4, respectively. This Conventional Example 4 is the same as the Conventional Example 4 in (4) described above.

These tires were evaluated with respect to maneuverability, ride comfort, weight saving, load durability, and cord shape stability in the same way as in (4) above. The presence or absence of disturbance at the ends during rolling was evaluated in the same way as in (5) above. The results are given in Table 11.

## Table 11

| | Example 42 | Example 43 | Example 44 | Example 45 | Example 46 | Example 47 | Conventional Example 4 |
|---|---|---|---|---|---|---|---|
| Cord Structure | 1×0.26+5×0.25 ultra low profile, open | 1×0.275+5×0.25 ultra low profile, open | 1×0.265+5×0.25 ultra low profile, open | 1×0.285+5×0.25 ultra low profile, open | 1×0.265+5×0.25 ultra low profile, open | 1×0.265+5×0.25 ultra low profile, open | 1+5×0.25 ultra low profile, open |
| Penetration Possibility | 74 | 74 | 74 | 74 | 74 | 74 | 0 |
| Aspect Ratio (=section height/section width) | 0.35 | 0.35 | 0.35 | 0.35 | 0.35 | 0.35 | 0.6 |
| Core/Sheath Pitch Ratio | 0.25 | 0.25 | 0.25 | 0.25 | 0.25 | 0.25 | |
| Wire Diameter Ratio (Core/Sheath) | 1.04 | 1.1 | 1.06 | 1.14 | 1.06 | 1.06 | |
| dr/dL (Cord Spacing/Cord Diameter) | 0.3 | 0.3 | 0.3 | 0.3 | 0.2 | 0.6 | |
| Maneuverability (Cp) | 120 | 120 | 120 | 115 | 140 | 110 | 100 |
| Ride Comfort | 130 | 130 | 130 | 130 | 130 | 130 | 100 |
| Weight Saving (Sidewall-reinforcing material) Index | 85 | 85 | 85 | 85 | 90 | 80 | 100 |
| Load Durability | 120 | 110 | 120 | 90 | 100 | 95 | 100 |
| Cord Shape Stability (Index) | 10 | 25 | 10 | 45 | 10 | 10 | 100 |
| (Core Protrusion) | | | | | | | (very bad) |
| End Disturbance during Rolling | no disturbance | no disturbance | no disturbance | end disturbance | no disturbance | no disturbance | △ |

As can be seen from Table 11, Examples 42-47 are superior to Conventional Example 4 in any one of maneuverability, ride comfort, weight saving, load durability, cord shape stability, and presence or absence of disturbance of ends during rolling. Note that the ratio $d_1/d_2$ (1.14) of Example 45 is outside the range of 1.04 to 1.1. Example 45 is inferior to Examples 42-44 in maneuverability, load durability, and cord shape stability. The ratio $d_r/d_L$ (0.2) of Example 46 is outside the range of 0.25 to 0.55. Example 46 is inferior to Examples 42-44 in weight saving and load durability. The ratio $d_r/d_L$ (0.6) of Example 47 is outside the range of 0.25 to 0.55. Example 47 is inferior to Examples 42-44 in maneuverability and load durability.

With respect to Examples 22-24 and Comparative Examples 24-27 given in Table 7, the presence or absence of end disturbance during rolling is A except for Comparative Examples 26 and 27.

The penetration possibility given in Tables 1-11 is defined in the manner described below. In a cord of the (1 + 11)-filament structure, a given length of steel cord is cut into 50 equal segments of 1 cm in the longitudinal direction. The possibility of the presence of cord sections having penetration percent of 25% or more is the penetration possibility. In a cord of (1 + 5)-filament structure, a given length of steel cord is cut into 50 equal segments of 1 cm in the longitudinal direction. The possibility of the presence of cord sections having penetration percent of 45% or more is the penetration possibility. In a cord of a (1 + 8)-filament structure, a given length of steel cord is cut into 50 equal segments of 1 cm in the longitudinal direction. The possibility of the presence of cord sections having penetration percent of 35% or more is the penetration possibility.

Industrial Applicability:

As described thus far, the present invention provides a pneumatic radial tire having tire components consisting of steel cords, the steel cords having the following features: (a) They have a (1 + N)-filament structure fabricated by twisting together N sheath filaments around a core filament that has been spirally curled longitudinally of the cords; (b) The horizontal cross section of each cord has a low profile; (c) In the horizontal cross section, gaps are left between the adjacent sheath filaments, thus forming an open structure; (d) The core filament is wedged in between the sheath filaments; and (e) The direction in which the core filament has been spirally curled is identical with the direction in which the sheath filaments are twisted together. Therefore, an ultra low profile can be imparted to the steel cords used in the tire components such as carcass layer, belt cover layer, bead-reinforcing layer, and sidewall-reinforcing layer. This can produce a more comfortable ride. Furthermore, the weight can be reduced further.

**Claims**

1.  A pneumatic radial tire having tire components consisting of steel cords,

    said steel cords having a (1 + N)-filament structure fabricated by twisting together N sheath filaments around a core filament that has been spirally curled longitudinally of the cords,
    each steel cord having a horizontal cross section of a low profile,
    adjacent ones of said sheath filaments forming gaps therebetween in the horizontal cross section, thus forming an open structure,
    said core filament being wedged in between said sheath filaments, and
    said sheath filaments being twisted together in a direction identical with a direction in which said core filament has been spirally curled.

2.  The pneumatic radial tire of claim 1, wherein each of said tire components is a carcass layer extending from one bead to another bead, a belt cover layer mounted at least outside lateral ends of belt layers in a tread, a bead-reinforcing layer extending from inside the tire to around the carcass layer and bead cores in the beads, or a sidewall-reinforcing layer extending from one bead to a corresponding sidewall outside the carcass layer.

3.  The pneumatic radial tire of claim 1 or 2, wherein said horizontal cross section of each cord has a section width $D_w$ and a section height $D_t$ and exhibits an aspect ratio $D_t/D_w$ of 0.25 to 0.70.

4.  The pneumatic radial tire of any one of claims 1-3, wherein said core filament and said sheath filaments have diameters in the range of 0.10 to 0.30 mm.

5.  The pneumatic radial tire of any one of claims 1-4, wherein said core filament has a spiral pitch $P_c$ and said sheath filaments have a twist pitch $P_s$, and wherein said spiral pitch and said twist pitch are so set that $P_c/P_s = 0.10$ to 0.50.

6. The pneumatic radial tire of any one of claims 1-5, wherein said N is 3 to 18.

7. The pneumatic radial tire of any one of claims 1-6, wherein when cord sections are obtained by cutting steel cords taken from the tire with N = 3 to 5 at regular intervals of 1 cm in the longitudinal direction into 50 equal parts, 50% or more of said cord sections have penetration ratios $L_0/D$ of 45% or more, where $L_0$ is a distance that said core filament wedges in between the adjacent sheath filaments beyond an inner tangential line common to said adjacent sheath filaments and D is a distance between said inner tangential line common to said adjacent sheath filaments and an outer tangential line common to said adjacent sheath filaments.

8. The pneumatic radial tire of any one of claims 1-6, wherein when cord sections are obtained by cutting steel cords taken from the tire with N = 6 to 9 at regular intervals of 1 cm in the longitudinal direction into 50 equal parts, 40% or more of said cord sections have penetration ratios $L_0/D$ of 35% or more, where $L_0$ is a distance that said core filament wedges in between the adjacent sheath filaments beyond an inner tangential line common to said adjacent sheath filaments and D is a distance between said inner tangential line common to said adjacent sheath filaments and an outer tangential line common to said adjacent sheath filaments.

9. The pneumatic radial tire of any one of claims 1-6, wherein when cord sections are obtained by cutting steel cords taken from the tire with N = 10 to 13 at regular intervals of 1 cm in the longitudinal direction into 50 equal parts, 30% or more of said cord sections have penetration ratios $L_0/D$ of 25% or more, where $L_0$ is a distance that said core filament wedges in between the adjacent sheath filaments beyond an inner tangential line common to said adjacent sheath filaments and D is a distance between said inner tangential line common to said adjacent sheath filaments and an outer tangential line common to said adjacent sheath filaments.

10. The pneumatic radial tire of any one of claims 1-6, wherein when cord sections are obtained by cutting steel cords taken from the tire with N = 14 to 18 at regular intervals of 1 cm in the longitudinal direction into 50 equal parts, 20% or more of said cord sections have penetration ratios $L_0/D$ of 20% or more, where $L_0$ is a distance that said core filament wedges in between the adjacent sheath filaments beyond an inner tangential line common to said adjacent sheath filaments and D is a distance between said inner tangential line common to said adjacent sheath filaments and an outer tangential line common to said adjacent sheath filaments.

# Fig. 1

# Fig. 2

Fig. 3

Fig. 4

Fig. 5

Fig. 6

# Fig. 7

## INTERNATIONAL SEARCH REPORT

| International application No. |
|---|
| PCT/JP00/01460 |

**A. CLASSIFICATION OF SUBJECT MATTER**
Int.Cl$^7$  B60C9/00  D07B1/06

According to International Patent Classification (IPC) or to both national classification and IPC

**B. FIELDS SEARCHED**

Minimum documentation searched (classification system followed by classification symbols)
Int.Cl$^7$  B60C9/00  D07B1/06

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)
WPI (DIALOG), "TIRE AND STEEL(W)CORD AND (ELLIPSE OR OVAL)"

**C. DOCUMENTS CONSIDERED TO BE RELEVANT**

| Category* | Citation of document, with indication, where appropriate, of the relevant passages | Relevant to claim No. |
|---|---|---|
| | JP, 2000-96466, A (Hiroaki KANAI), 04 April, 2000 (04.04.00)  (Family: none) | |
| EX | Entire document | 1-9 |
| EA | Entire document | 10 |
| | JP, 2000-73285, A (Hiroaki KANAI), 07 March, 2000 (07.03.00)  (Family: none) | |
| EX | Entire document | 1-9 |
| EA | Entire document | 10 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June, 2000 (07.06.00) | 20.06.00 |

| Name and mailing address of the ISA/ | Authorized officer |
|---|---|
| Japanese Patent Office | |
| Facsimile No. | Telephone No. |

Form PCT/ISA/210 (second sheet) (July 1992)